# EUROPEAN PATENT SPECIFICATION

(11) **EP 1 489 679 B1**
(45) Date of publication and mention of the grant of the patent: **26.03.2014**
(21) Application number: 04002241.0
(22) Date of filing: 02.02.2004
(51) Int. Cl.: H01M 10/28, H01M 10/04, H01M 4/02

(54) **Secondary Battery**
Sekundärbatterie
Batterie secondaire

(30) Priority: 13.02.2003 JP 2003035272
(43) Date of publication of application: 22.12.2004
(73) Proprietor: TOYOTA JIDOSHA KABUSHIKI KAISHA, Toyota-shi, Aichi-ken, 471-8571 (JP)
(72) Inventor: Nishide, Yukimasa, Toyota-shi, Aichi-ken, 471-8571 (JP)
(74) Representative: Kuhnen & Wacker

(56) References cited:
- EP-A- 0 239 051
- EP-A- 0 478 038
- EP-A- 0 949 699
- GB-A- 1 096 686
- US-A- 4 119 772
- US-A- 4 288 502
- US-A- 4 583 286
- US-B1- 6 287 719
- US-B1- 6 312 848
- US-B1- 6 340 877
- PATENT ABSTRACTS OF JAPAN vol. 2000, no. 04, 31 August 2000 (2000-08-31) & JP 2000 030746 A (TOYOTA MOTOR CORP), 28 January 2000 (2000-01-28)
- PATENT ABSTRACTS OF JAPAN vol. 2003, no. 04, 2 April 2003 (2003-04-02) & JP 2002 367683 A (SONY CORP), 20 December 2002 (2002-12-20) & PATENT ABSTRACTS OF JAPAN vol. 2002, no. 12, 12 December 2002 (2002-12-12) & JP 2002 216854 A (TOYOTA MOTOR CORP), 2 August 2002 (2002-08-02)
- PATENT ABSTRACTS OF JAPAN vol. 1998, no. 01, 30 January 1998 (1998-01-30) & JP 09 231993 A (TOYOTA MOTOR CORP; TOYOTA AUTOM LOOM WORKS LTD), 5 September 1997 (1997-09-05)

## Description

### BACKGROUND OF THE INVENTION

### 1. Field of the Invention

The invention relates to a secondary battery and a manufacturing system and method therefor. More particularly, the invention relates to a secondary battery in which a plurality of cells are connected together in one direction, and a manufacturing system and method therefor.

### 2. Description of the Related Art

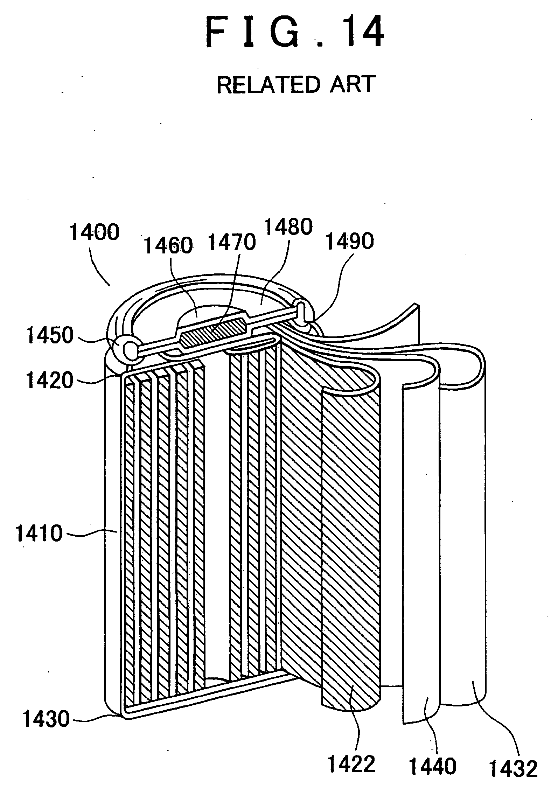

As a secondary battery to be mounted in a hybrid vehicle, a cylindrical, sealed nickel hydrogen secondary battery having a construction such as that shown in FIG. 14, is known, for example (Electric Vehicle Handbook (2001), Electric Vehicle Handbook, pp. 261-262, Maruzen).

Referring to FIG. 14, a secondary battery 1400 includes a case 1410, a positive electrode collector 1420, a positive electrode plate 1422, a negative electrode collector 1430, a negative electrode plate 1432, a separator 1440, an insulation gasket 1450, a cap 1460, a safety valve 1470, a sealing plate 1480, and an insulation ring 1490. In this secondary battery 1400, the cap 1460 is the positive electrode and the case 1410 is the negative electrode.

In order to obtain high voltage using the secondary battery 1400 of this construction, it is necessary to connect a sufficient number of the secondary batteries together to obtain the desired voltage. In this case, however, connective resistance is generated between the cap 1460 of the secondary battery 1400 and the case of the adjacent secondary battery, which reduces the overall voltage, thereby reducing the efficiency of the secondary battery.

To solve this problem, JP(A) 4-341766 discloses a wound multiple-cell, sealed secondary battery that improves the efficiency of the secondary battery by reducing voltage loss between cells and inhibits the active material utilization rate from falling at the outer periphery of the battery. This secondary battery is provided with a bipolar electrode plate, a first cell electrode plate and an end electrode plate. The bipolar electrode plate includes positive and negative electrode active material to the left and right of a single band-shaped collector. The bipolar electrode plate also has a protruding member that separates the cells at the center portion of the collector. The first cell electrode plate and the end cell electrode plate include a positive or negative electrode active material provided on either the left or the right of a predetermined portion of the single band-shaped collector. The first cell electrode plate and the end cell electrode plate also have a protruding member that separates the cell from an adjacent cell at the upper portion or lower portion of the cell. These three types of electrode plates are layered upon one another such that the separator is sandwiched between the positive electrode plate and negative electrode plate, thus forming an electrode plate set. This electrode plate set is then wound in a spiral so as to form a plurality of integrated cells.

With the secondary battery disclosed in JP (A) 4-341766, voltage loss at the connecting portion between cells is able to be suppressed so voltage during discharge is able to be kept high. Accordingly, the efficiency of the secondary battery during discharge is able to be improved.

However, with the secondary battery according to the foregoing publication, when the wound set of electrodes is connected with a collector, the output voltage falls due to an increase in internal resistance. Moreover, a connection of this sort increases the number of parts, which in turn increases the number of man-hours it takes to manufacture the secondary battery.

Furthermore, with a secondary battery that outputs high voltage, the life of the secondary battery decreases unless sufficient cooling is provided.

Another battery construction is disclosed in US 6,287,719 B1 that includes a housing and a spiral-wound electrode assembly disposed in the housing and defining at least two electrochemical cells that are electrically connected in series. The cells include wound layers of a positive electrode, a negative electrode, and a polymer electrolyte provided between the positive and negative electrode layers. The layers of each successive electrochemical cell are wound around the layers of the previous cell and are preferably separated therefrom by an insulating layer.

A charging element device comprising columnar charging element modules arranged by serially connecting cylindrical cells via an insulating ring is disclosed in US 6,340,877 B1. The module having a terminal at opposite ends thereof; charging element module groups arranged by laterally aligning the modules in parallel; a built-up construction of the modules arranged by building-up the modules groups in several stages; bus bar plates disposed at the opposite ends of the built-up construction and fitted to the terminals; bus bars disposed outside the bus bar plate and serially connecting the terminals; a housing in which cooling air flows and the built-up construction is contained; and mounting plates having a securing ring for holding and securing the insulating ring, the mounting plate being provided below the lowermost modules group, above the uppermost modules group, and between the intermediate modules groups. The mounting plates are integrally bound so as to hold and secure the insulating ring by the securing ribs, a restriction arrangement for rotation of the insulating ring is provided to the insulating ring and the securing rib.

A lithium secondary battery is further known from EP 0 949 699 A2 that includes a battery case, an internal electrode body contained in the battery case and including a positive electrode, a negative electrode and a separator made of porous polymer. The positive electrode and the negative electrode are wound or laminated so that the positive electrode and negative electrode are not brought into direct contact with each other via the separator.

A battery comprising a plurality of photoelectrochemical cells arranged in series in an envelope is further known from US 4,288,502. Each of the cells comprises a photoelectrode, a counterelectrode, and an electrolyte. The photoelectrode and counterelectrode of each cell is attached to and forms an electrical contact with conductive means. The battery further comprises at least one separation means for separating each of the cells from one another so as to form a liquid-tight fit within the envelope whereby each of the cells is liquid tight. A method of assembling a battery comprising a plurality of photoelectrochemical cells in an envelope is also disclosed in said piece of art.

Document JP 2000-30747 discloses a bipolar type lithium ion secondary battery in which a positive active material is formed on a positive current collecting foil and a negative active material is formed on a negative current collecting foil. The positive active material and the negative active material are faced through a separator, then they are spirally wound to form a battery constitution body. The same other battery constitution body is wound on the outside of the battery constitution body through an insulating container, and the specified numbers of battery constitution bodies are wound in the same way, then electrically connected in series from the inside battery constitution body to the outside other battery constitution body to obtain this bipolar type lithium ion secondary battery.

### SUMMARY OF THE INVENTION

In view of the foregoing problems, this invention thus provides a secondary battery and manufacturing system and method therefor, capable of improving output and battery life, reducing the number of parts used, and reducing the number of man-hours necessary for manufacturing the secondary battery.

A first aspect of the invention relates to a secondary battery that includes a plurality of cells aligned in one direction. Each cell of the plurality of cells includes a flat sheet-shaped first electrode of one polarity and a flat sheet-shaped second electrode of another polarity layered on top of one another with a separator disposed therebetween. An edge portion of the first electrode in a first cell of the plurality of cells is overlapped and joined with an edge portion of the second electrode in a second cell, which is adjacent to the first cell, of the plurality of cells. The secondary battery further includes a shaft-shaped member around which the layered electrodes can be wound. The layered electrodes are wound around the shaft-shaped member such that the edge portion of the first electrode in the first cell of the plurality of cells is wound around the edge portion of the second electrode in the second cell, which is adjacent to the first cell, of the plurality of cells. The polarity of the edge portion of the first electrode in the first cell is different from the polarity of the edge portion of the second electrode in the second cell.

Each cell of the plurality of cells in the secondary battery includes the layered first and second electrodes. The edge portion of the first electrode of the first cell in the secondary battery overlaps with the edge portion of the second electrode of the adjacent second cell. Accordingly, one of the electrodes in one cell is directly connected to one of the electrodes in another cell so internal resistance from connecting the cells is able to be reduced. As a result, output from the secondary battery improves. Also, the parts to connect the cells, in addition to the processes for incorporating those parts, become unnecessary. As a result, it is possible to provide a secondary battery able to improve output and which reduces the number of parts and manufacturing processes. Further, winding the layered electrodes ensures the connection of the edge portions of the cells. As a result, the internal resistance in the secondary battery can be reduced, and further, it is possible to prevent a short circuit via the electrolytic solution in the secondary battery. When the layered electrodes are wound around the shaft-shaped member (such as a hollow or solid shaft), they are able to be wound precisely such that the electrodes are not loose and do not sag in the cell, thus improving winding efficiency.

The first electrode and the second electrode may also be layered in a manner in which they are offset from one another in one direction. Further, the first and second electrodes may have the same flat sheet-like shape.

Accordingly, because the edge portions of the layered electrodes are made either negative or positive, they can be used to connect adjacent cells, which reduces internal resistance generated by connecting the cells.

The shaft-shaped member may also be hollow.

Accordingly, the secondary battery can be cooled by injecting a medium, such as a coolant or other kind of cooling body or the like, into the hollow shaft. As a result, it is possible to suppress a decrease in the battery life of the secondary battery.

At least the surface of the shaft-shaped member may be made of resin.

Accordingly, the inside of the shaft-shaped member can be insulated from the outside thereof.

The edge portion of the first electrode in the first cell and the edge portion of the second electrode in the adjacent second cell may be joined by crimping.

Accordingly, because the first and second cells, which are adjacent to each other, are able to be reliably connected to each other via the edge portions of their electrodes, internal resistance in the secondary battery is reduced and output of the secondary battery can be improved.

Also, in the secondary battery, the edge portion of the first electrode in the first cell and the edge portion of the second electrode in the second cell may be joined by pressure from a ring member.

This prevents the edge portion of the first electrode of the first cell from coming away from the edge portion of the second electrode in the second cell. Therefore, because the adjacent first and second cells are reliably connected, internal resistance in the secondary battery is reduced.

Further, in the secondary battery, the edge portion of the first electrode in the first cell and the edge portion of the second electrode in the second cell may be joined by welding.

This reinforces the connection between the edge portions of the cells, thus reducing internal resistance in the secondary battery.

The secondary battery may also further include a case for enclosing the plurality of cells. The edge portion of the first electrode in the first cell and the edge portion of the second electrode in the second cell may be joined by being pressed together by pressure applied to the case from the outside.

Accordingly, because the layered electrodes are protected from the outside by the case, degradation of the electrodes is suppressed and insulation from the outside is able to be ensured. Also, because the overlapping edge portions of the electrodes are reliably connected by being pressed together, internal resistance from connecting the cells is reduced, thereby improving output from the secondary battery.

### BRIEF DESCRIPTION OF THE DRAWINGS

The foregoing and further objects, features and advantages of the invention will become apparent from the following description of exemplary embodiments with reference to the accompanying drawings, wherein like numerals are used to represent like elements and wherein:
FIG 1 is a block diagram of a secondary battery according to a first exemplary embodiment;
FIG 2 is a cross-sectional view of the secondary battery according to the first exemplary embodiment;
FIG 3 is a block diagram of a manufacturing system for the secondary battery according to the first exemplary embodiment;
FIG 4 is a side view of a winding apparatus included in the manufacturing system shown in FIG 3;
FIG. 5 is a top view of the winding apparatus included in the manufacturing system shown in FIG 4;
FIG 6 is a side view of an insulation sheet winding apparatus included in the manufacturing system shown in FIG 4;
FIGS 7A and 7B are flowchart illustrating a manufacturing method for the secondary battery according to the first exemplary embodiment;
FIG 8 is a block diagram of a secondary battery according to a second exemplary embodiment;
FIG. 9 is a block diagram of a manufacturing system for the secondary battery according to the second exemplary embodiment;
FIGS. 10A and 10B are flowchart illustrating a manufacturing method for the secondary battery according to the second exemplary embodiment;
FIG 11 is a block diagram of a secondary battery according to a third exemplary embodiment;
FIG 12 is a block diagram of a manufacturing method for the secondary battery according to the third exemplary embodiment;
FIGS. 13A and 13B are flowchart illustrating a manufacturing method for the secondary battery according to the second exemplary embodiment; and
FIG 14 is a block diagram of a typical secondary battery.

### DETAILED DESCRIPTION OF THE PREFERRED EMBODIMENTS

In the following description and the accompanying drawings, the invention will be described in more detail in terms of exemplary embodiments.
Exemplary embodiments will hereinafter be described with reference to the accompanying drawings. The scope of the invention, however, is defined by the appended claims only. In the following description, like parts will be denoted by like reference numerals. Detailed descriptions of such parts that are repetitious will be omitted.

### [First Embodiment]

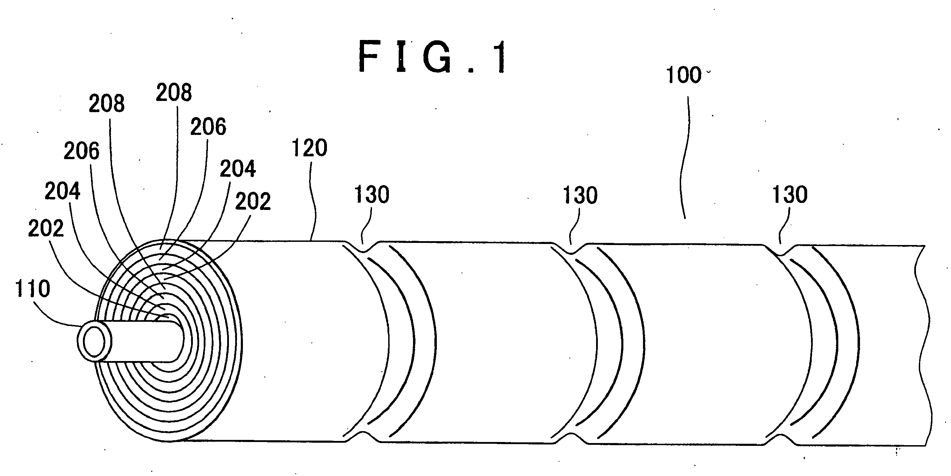

A first exemplary embodiment will now be described with reference to FIGS. 1 to 7B.

FIG 1 shows a secondary battery 100 according to the first exemplary embodiment. This secondary battery 100 has a plurality of cells aligned in one direction. The battery may, for example, be used to supply power to an electric motor (not shown) to be mounted in a hybrid vehicle, or as a power source for a household electrical appliance or the like.

As shown in FIG. 1, the secondary battery 100 includes a hollow shaft 110, a battery case 120, a positive electrode sheet 202, a negative electrode sheet 206, separator sheets 204 and 208, an insulation sheet (not shown), and an electrolytic solution (also not shown). The insulation sheet is wound on the inside of the battery case 120. As will be described later, the positive electrode sheet 202, the negative electrode sheet 206, and the separator sheets 204 and 208 are wound on the shaft 110 to the inside of the insulation sheet. The secondary battery 100 is then crimped at a predetermined crimping portion 130.

A coolant (not shown) is injected into the shaft 110 so as to cool the shaft 110 which inhibits, for example, degradation of performance (e.g., shortened life) due to heat generation.

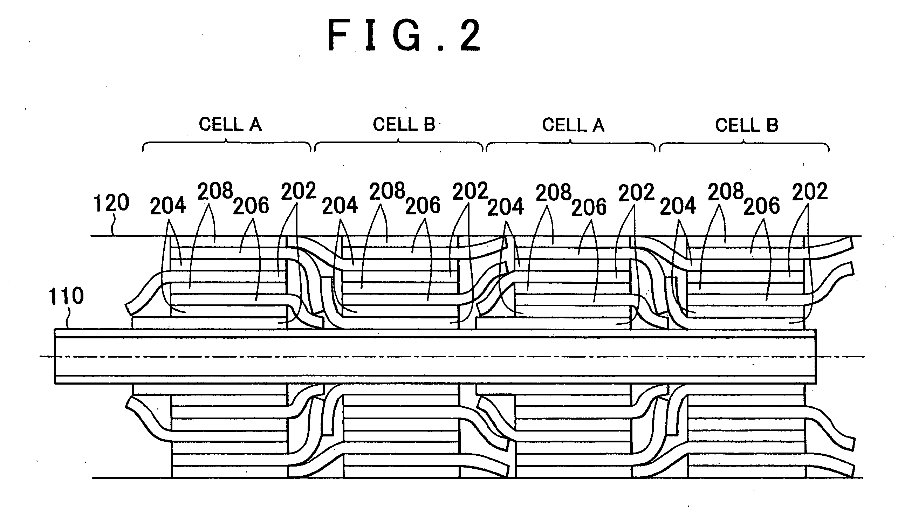

The cross-section construction of the secondary battery 100 according to the first exemplary embodiment will now be described with reference to FIG 2. FIG 2 is a cross-sectional view of the secondary battery 100 shown in FIG 1 cut length-wise along the shaft 110.

Referring to FIG 2, the secondary battery 100 includes a plurality of cells A and B. These cells A and B are arranged alternately. In each of the cells A and B, the positive electrode sheet 202, the separator sheet 204, the negative electrode sheet 206, and the separator 208 are wound.

The positive electrode sheet 202 and the negative electrode sheet 206 form edge portions of each cell (i.e., portions which protrude from the portion of the cell where the sheets are layered on top of one another) so that when two of the cells are connected, the positive electrode sheet 202 of one cell faces the negative electrode sheet 206 of the other cell. The width of the edge portions (i.e., the length in the axial direction) can be preset based on, for example, the number of windings of the layered sheets (or the outer diameter of the secondary battery 100) or a method for connecting cells (crimping, welding, pressure by a ring member, or the like).

The positive electrode sheet 202 and the negative electrode sheet 206 are both made of electrical conductive material. In this exemplary embodiment, the positive electrode sheet 202 is coated with sintered nickel, for example, and the negative electrode sheet 206 is coated with a hydrogen alloy in a paste form, for example, but the invention is not limited to this.

The separators 204 and 208 are sheets for separating the positive electrode sheet 202 from the negative electrode sheet 206. In this exemplary embodiment, these separators 204 and 208 are made of a non-woven fabric or a finely perforated film, for example, but the invention is not limited to this. Any material may be used as long as it is stable with respect to the electrolytic solution and has a saturation rate for the electrolytic solution that fulfills a predetermined condition.

Cell B is formed after cell A. At the connecting portion where cell B connects with cell A, the edge portion of the electrode in cell B is wound around so as to overlap the edge portion of the electrode in cell A. Accordingly, the edge portion of the electrode in cell A is pressed toward the shaft 110 by the edge portion of the electrode in the adjacent cell B. This ensures the connection between cell A and cell B.

The number of windings of each of the sheets is not particularly limited, but may be predetermined based on, for example, the capacity of the secondary battery 100. Also, the number of cells A and B are not limited to the number shown in FIG. 2. Rather, the number may be determined based on, for example, the voltage or the like required of the secondary battery 100.

This construction obviates the need for a collector which is necessary in a typical secondary battery. As a result, even if a plurality of cells are connected to obtain a predetermined voltage, the internal resistance from connecting the cells can be reduced. Accordingly, output from the secondary battery can be improved and the number of parts can be reduced.

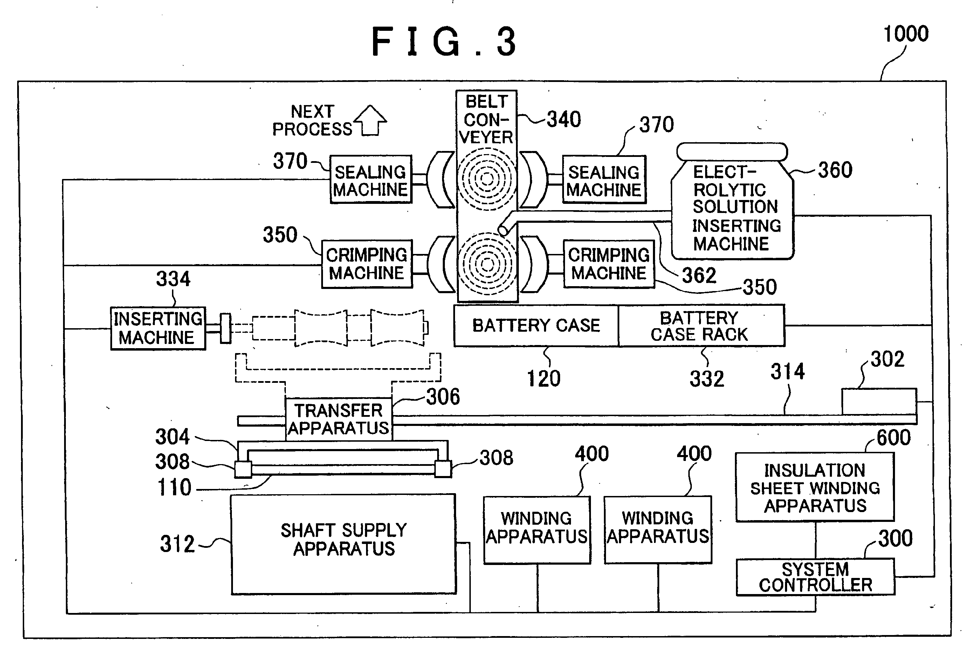

A manufacturing system 1000 for manufacturing the secondary battery according to the first exemplary embodiment will now be described with reference to FIG. 3. This manufacturing system 1000 includes manufacturing equipment that carries out various manufacturing processes, from introducing the structural materials of the secondary battery (i.e., shaft, electrode sheets, separator sheets, insulation sheets, electrolytic solution, battery case, and the like) to sealing the battery case.

Referring to the drawing, the manufacturing system 1000 includes a system controller 300, a linear guide controller 302, a transfer apparatus 306, a shaft supply apparatus 312, an inserting machine 334, a battery case rack 332, a belt conveyer 340, two crimping machines 350, an electrolytic solution injecting machine 360 which is provided with a nozzle 362, two sealing machines 370, two winding apparatuses 400, and an insulation sheet winding apparatus 600.

The system controller 300 is connected to each apparatus in the manufacturing system 1000, and controls the processes carried out by those apparatuses based on predetermined conditions.

The linear guide controller 302 controls the operation of the transfer apparatus 306 based on a command from the system controller 300.

Based on a command from the linear guide controller 302, the transfer apparatus 306 moves on a transfer rail 314 and rotates around to a predetermined location (illustrated by the dotted lines in FIG 3) to supply the shaft 110, around which the sheets have already been wound, to the inserting machine 334. The transfer apparatus 306 is provided with a loader 304, which in turn is provided with chucks 308. The loader 304 grabs the shaft 110 with the chucks 308 based on a command from the linear guide controller 302. When the transfer apparatus 306 rotates around to the predetermined location, the chucks 308 release the shaft 110 so as to supply it to a predetermined location.

The chucks 308 take the shaft 110 from the shaft supply apparatus 312 and holds it until supplying it to the inserting machine 334.

In this exemplary embodiment, the shaft 110 is a hollow shaft such as a tube, for example, but it may also be a solid shaft. When a hollow shaft is used, a coolant medium can be injected into the shaft. In this case, the coolant medium can be injected into the shaft at the time the secondary battery is mounted (in a vehicle, for example), for example. Also, the shaft 110 may be a rigid metal body, for example, as long as it has a coating of insulation on the outside (the outside may be coated with resin, for example). This enables the inside of the shaft 110 to be insulated from the outside of the shaft 110.

The winding apparatus 400 winds the positive electrode sheet 202, the negative electrode sheet 206, and the separators 204 and 208 on the shaft 110, as will be described later. In FIG 3, the manufacturing system 1000 is provided with two of the winding apparatuses 400, but the invention is not limited to this. That is, more or fewer of the winding apparatuses 400 may be provided depending on, for example, the size of the secondary battery (i.e., the length in the axial direction) or conditions such as production rate.

The shaft supply apparatus 312 supplies the shaft 110, which is part of the secondary battery, to the transfer apparatus 306 every predetermined cycle time according to a command from the system controller 300.

The inserting machine 334 inserts the shaft 110, onto which the positive electrode sheet 202, the separators 204 and 208, the negative electrode sheet 206, and the insulation sheet 210 have been wound, into the battery case 120 according to a command from the system controller 300. The battery case 120 is supplied from the batter case rack 332 toward the wound shaft 110 according to a command from the system controller 300.

After the shaft 110 wound with the sheets has been inserted into the battery case 120, the crimping machine crimps the battery case 120 at predetermined locations so as to join the cells (FIG 2). The predetermined locations are at portions at which one cell is connected to another (i.e., portions at which the edge portions (offset portions) of the electrodes of each cell overlap). This ensures connection between the cells. Further, using the crimping method it is possible to reliably connect the overlapping edge portions of two adjacent cells in cases where two adjacent cells are unable to be connected by, for example, metallurgical bonding such as welding or pressing with a ring member or the like.

The electrolytic solution injecting machine 360 supplies electrolytic solution to inside the battery case 120. This electrolytic solution may be, for example, diluted sulfuric acid or an aqueous potassium hydroxide, but it is not limited to this as long as the electrolytic solution has i) good ion solubility and ion conductivity, ii) no electron conductivity, and iii) a high stability temperature zone or a high break down voltage by which the solute in the electrolytic solution breaks down.

The sealing machine 370 seals the secondary battery after the electrolytic solution has been injected so as to prevent the electrolytic solution from leaking out. There are various methods for sealing including, but not limited to, pressing or inserting a sealing plate or a seal.

Assembly of the secondary battery is complete when the shaft 110 wound with the sheets and the electrolytic solution are sealed in the battery case 120 and adjacent cells are joined through predetermined processes with the manufacturing equipment described above. The secondary battery is then transferred on the conveyer belt 340 to the next process (such as an inspection process).

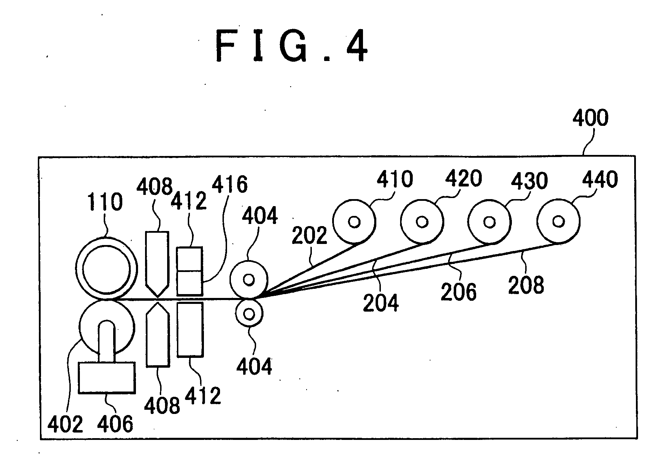

The winding apparatus 400 used in the manufacturing system 1000 according to the exemplary embodiment will now be described with reference to FIG 4, which is a side view of the winding apparatus 400.

As shown in the drawing, the winding apparatus 400 includes a pressure roller 402, a hydraulic piston 406, two sheet cutters 408, two sheet holders 412, an adhesive applying portion 416, two feed rollers 404, and four sheet rollers 410, 420, 430, and 440.

The pressure roller 402 presses the sheets onto the shaft 110 with the pressure applied by the hydraulic piston 406. Once the winding of the sheets starts, the pressure roller 402 continues to press the sheets onto the shaft 110 with regulated hydraulic pressure.

The feed rollers feed the sheets from the sheet rollers to the sheet holders 412 while keeping the sheets in a predetermined state.

When a predetermined number of windings is complete, the sheet cutters 408 cut the sheets. When the sheets are not being wound, the sheet holders 412 hold the sheets in a predetermined state in preparation for the next winding process.

The positive electrode sheet 202 is originally wound on the sheet roller 410; the separator sheet 204 is originally wound on the sheet roller 420; the negative electrode sheet 206 is originally wound on the sheet roller 430; and the separator sheet 208 is originally wound on the sheet roller 440. A predetermined amount of tension is applied to these sheets so as to prevent them from sagging.

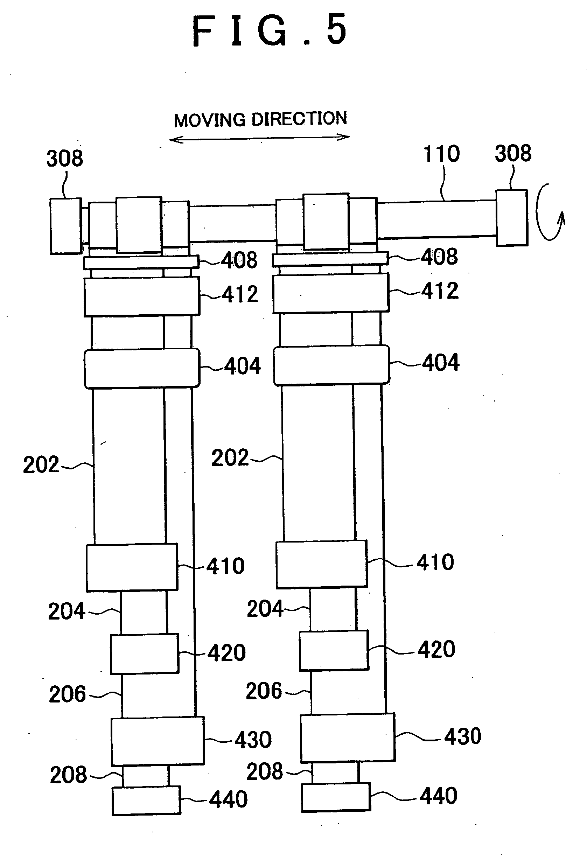

As shown in FIG. 2, the sheets rollers 410, 420, 430, and 440, are arranged so that the edge portion of the positive electrode sheet 202 and the edge portion of the negative electrode sheet 206 are offset. This arrangement is illustrated in detail in FIG 5.

The sheets supplied from the sheet rollers are arranged in a predetermined location with the feed rollers 404 and supplied to the shaft 110 while passing between the sheet holders 412. The adhesive applying portion 416 applies an adhesive to the ends of the sheets to prevent the ends from coming away from the shaft 110. The end portions of the sheets are then feed to the shaft 110. The pressure roller 402 is pressed by the hydraulic piston 406 so as to press the sheets to the shaft 110. As a result, the ends of the sheets adhere to the shaft 110.

The fashion in which the winding apparatus 400 winds the sheets around the shaft 110 while the edge portions of the positive and negative electrode sheets are offset will now be described with reference to FIG 5, which is a top view of the winding apparatus 400 with the sheets arranged in the predetermined location.

Referring to the drawing, the sheets wound around the shaft 110 are wound in the following order from the inside (nearest the shaft 110) to the outside (farthest away from the shaft 110) in the radial direction of the cell: the positive electrode sheet 202, the separator sheet 204, the negative electrode sheet 206, and the separator sheet 208. The positive secondary battery 202 and the negative electrode sheet 206 are arranged so their edge portions are offset from one another. The cells A and B are thus formed by winding the sheets arranged in this way on the shaft 110, as shown in FIG 2. Any one edge portion of each cell is formed of sheets all having one polarity, and the other edge portion of each cell is formed of sheets all having another polarity, such that each cell A and B has both a positive pole (electrode) and a negative pole (electrode). This construction enables the edge portions to be used to connect adjacent cells together.

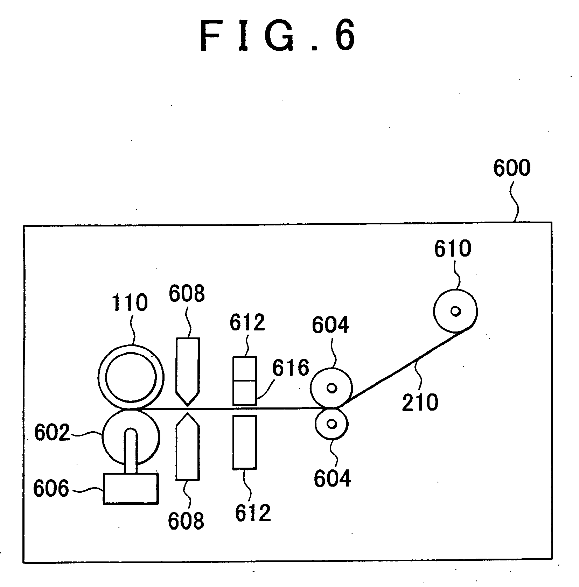

The insulation sheet winding apparatus 600 used in the manufacturing system 1000 will now be described with reference to FIG. 6, which is a side view of the insulation sheet winging apparatus 600 shown in FIG. 3.

As shown in the drawing, the insulation sheet winding apparatus 600 includes a pressure roller 602, two feed rollers 604, a hydraulic piston 606, two sheet cutters 608, a sheet roller 610, and a sheet holder 612. The insulation sheet 210 is originally wound on the sheet roller 610 and a predetermined amount of tension is applied to the insulation sheet 210 so that it does not sag.

The respective functions of the rollers, hydraulic piston 606, sheet cutters 608, sheet holders 612, and adhesive applying portion 616 are essentially the same as those of the rollers, the hydraulic piston 406, the sheet cutters 408, the sheet holder 412, and the adhesive applying portion 416 so they will not be repeated.

Once the shaft 110, around which the sheets have been wound by the winding apparatus 400, is supplied to a predetermined location, the insulation sheet winding apparatus 600 winds the insulation sheet 210 around the outer periphery of the shaft 110 so that the positive electrode sheet 202 or the negative electrode sheet 206 wound by the winding apparatus 400 can be insulated from the outside.

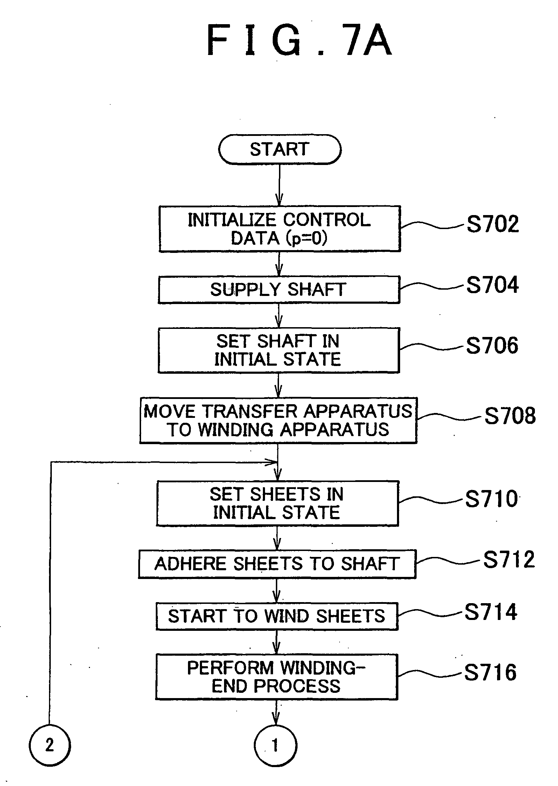

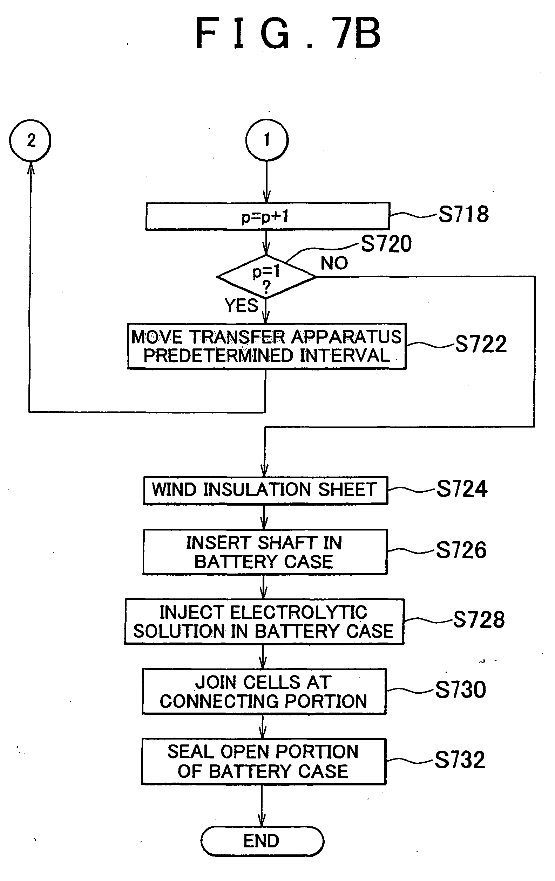

The manufacturing method of the secondary battery 100 according to the exemplary embodiment will now be described with reference to the flowchart of FIGS. 7A and 7B. The manufacturing method may be used, for example, in the manufacturing system 1000 shown in FIG. 3.

In step S702, the system controller 300 initializes control data. This control data includes a counter p indicative of the number of windings of the sheets, the number of cells in the secondary battery, and the like.

In step S704, the shaft supply apparatus 312 supplies the shaft 110 to a predetermined location according to a command from the system controller 300. This predetermined location is a location from which the chucks 308 are able to grab the shaft 110. This location can be changed depending particular characteristics of the shaft, such as the length of the shaft 110 and whether the shaft is hollow or solid.

In step S706, the loader 304 sets the shaft 110 in a predetermined initial state, in which both ends of the shaft 110 are grabbed by the chucks 308 provided on the loader 304.

In step S708, the system controller 300 moves (to the right in FIG 3) the transfer apparatus 306 to a predetermined location for the winding apparatus 400 using the linear guide controller 302. This predetermined location is a location in which the winding apparatus 400 is able to wind the sheets onto the shaft 110.

In step S710, the winding apparatus 400 sets the positive electrode sheet 202, the negative electrode sheet 206, and the separator sheets 204 and 208 in an initial state. This initial state is a state in which the ends of the sheets are aligned and an adhesive is applied thereto.

In step S712, the winding apparatus 400 sets the sheets against the shaft 110. Accordingly, the ends of the positive electrode sheet 202, the negative electrode sheet 206, and the separator sheets 204 and 208 adhere to the shaft 110. Pressure is then applied to the ends by the pressure roller 402 so that they do not come away from the shaft 110.

In step S714, the winding apparatus 400 winds the positive electrode sheet 202, the negative electrode sheet 206, and the separator sheets 204 and 208 onto the shaft 110 while rotating the shaft 110 at a predetermined speed. At this time, the positive electrode sheet 202 and the negative electrode sheet 206 are provided so that their edge portions are offset from one another. Therefore, in a cell formed on the shaft 110, only the edge portion of the positive electrode sheet 202 protrudes in one direction of the shaft and only the edge portion of the negative electrode sheet 206 protrudes in the other direction of the shaft.

In step S716, the winding apparatus 400 executes a winding-end process. This winding-end process is executed when a predetermined number of windings have been completed. This process includes a process in which the sheets are cut with the sheet cutters 608 (FIG 6) and a process in which the sheets are held in a predetermined state by the sheets holders 412 in preparation for the next winding process.

In step S718, the system controller 300 increases the counter p by 1, thus recording the completion of one winding process with respect to the shaft 110.

In step S720, the system controller 300 determines whether the counter p is equal to 1. If the determination indicates that the counter p is 1 (i.e., YES in step S720), the routine proceeds on to step S722. If the determination does not indicate that the counter p is 1 (i.e., NO in step S720), the routine proceeds on to step S724.

In step S722, the system controller 300 moves the transfer apparatus 306 a predetermined interval with the linear guide controller 302. This predetermined interval is the width of the positive electrode sheet 202 or the negative electrode sheet 206. Moving the transfer apparatus 306 in this way enables the shaft 110 to be put in position for the next winding. The routine then returns to step S710.

In step S724, the insulation sheet winding apparatus 600 winds the insulation sheet onto the shaft 110. This winding process is executed after the positive electrode sheet 202, the negative electrode sheet 206, and the separator sheets 204 and 208 have finished being wound.

In step S726, the inserting machine 334 inserts the shaft 110, around which the insulation sheet has been wound, into the battery case 120. This is done after it has been confirmed that the insulation sheet is wound around the shaft 110 so as to prevent a shaft without the insulation sheet from being inserted into the battery case 120.

In step S728, the electrolytic solution injecting machine 360 injects a predetermined amount of electrolytic solution into the battery case 120 through the nozzle 362 according to a command from the system controller 300. The battery case 120 is then transferred to the crimping machine 350.

In step S730, the crimping machine 350 crimps the battery case 120 in a predetermined location on the outside according to a command from the system controller 300. This predetermined location is preset based on the size (length in the axial direction) of the cell in the secondary battery. The battery case 120 is then transferred to the sealing machine 370.

In step S732, the sealing machine 370 seals an open portion of the battery case 120 according to a command from the system controller 300 so as to prevent the electrolytic solution that has been injected into the battery case 120 from leaking out.

The operation of the manufacturing system 1000 according to the exemplary embodiment will now be described based on the foregoing described construction and flowchart.

The control data of the system controller 300 is initialized (step S702) and the shaft 110 is supplied to a predetermined location by the shaft supply apparatus 312 (step S704). The chucks 308 then grab the shaft 110 according to a command from the linear guide controller 302 and set the shaft 110 in an initial state (step S706). After confirming that the chucks 308 have grabbed the shaft 110, the transfer apparatus 306 then moves to the winding apparatus 400 (step S708).

Once the shaft 110 is arranged in a predetermined location, the adhesive is applied to the ends of the positive electrode sheet 202, the negative electrode sheet 206, and the separator sheets 204 and 208 (step S710). After the ends of the sheets are then adhered to the shaft 110 by the pressure roller 402 (step S712), the loader 304 rotates holding the shaft 110 with the chucks 308 and the sheets start to be wound with the edge portions of the positive electrode sheet 202 and the negative electrode sheet 206 offset (step S714).

Once the sheets have been wound a predetermined number of times, they are then cut with the sheet cutters 408 and the winding process ends (step S716). The sheets are then held in a predetermined location by the sheet holders 412.

The control data of the system controller 300 is then increased by 1 (step S718). If it is confirmed at this time that the first winding process has just been completed (i.e., YES in step S720), the linear guide controller 302 moves the transfer apparatus 306 a predetermined interval (step S722) where the adhesive is applied to the sheets so that they are set in the initial state again (step S710). The sheets are then adhered to the shaft 110 (step S712) and the winding process is performed again (step S714 and 716).

If, on the other hand, when the counter of the system controller 300 is increased by 1 (step S718), it is determined that the second winding process has just been completed (i.e., NO in step S720), the linear guide controller 302 moves the transfer apparatus 306 to a predetermined location with respect to the insulation sheet winding apparatus 600. After the insulation sheet 210 has been wound on the sheet 110 (step S724), the transfer apparatus 306 moves to a predetermined location and rotates so that it is facing the opposite direction that it was previously facing. The chucks 308 then release the shaft 110 in a predetermined location for the inserting machine 334.

After the inserting machine 334 inserts the shaft 110 into the battery case 120 (step S726), the battery case 120 is then rotated so that an open portion thereof faces upward. The electrolytic solution injecting machine 360 then injects electrolytic solution into the open portion (step S728) and the battery case 120 is then transferred to the crimping machine 350. The crimping machine 350 then crimps the battery case 120 at a predetermined location, thus joining the cells at the connecting portion (step S730). After this is done, the battery case 120 is transferred on a belt conveyer 340 to a predetermined location with respect to the sealing machine 370. The sealing machine 370 then seals the open portion of the battery case 120 (step S732), after which the battery case 120 is transferred on to the next process.

According to the secondary battery 100, the manufacturing system 1000, and the manufacturing method according to the first exemplary embodiment as described above, the positive electrode sheet 202 and the negative electrode sheet 206 are wound, with the separator sheets 204 and 208 alternately interspersed in between, around the shaft 110 of the secondary battery in such a way that the edge portion of the positive electrode sheet 202 is offset from the edge portion of the negative electrode sheet 206 in the direction in which the cells connect. Accordingly, the edge portion of the positive electrode sheet 202 and the edge portion of the negative electrode sheet 206 can be used to connect adjacent cells, which obviates the need for a separate connecting member and process. As a result, internal resistance from the connection between the cells is reduced so output of the secondary battery can be improved. Therefore, it is possible to provide a secondary battery, a manufacturing system, and manufacturing method for that secondary battery that can improve output and reduce the number of parts and manufacturing processes.

In the manufacturing system and manufacturing method for the secondary battery according to this exemplary embodiment, a first forming step (step S714) is performed by the winding apparatus 400 to form a cell in which the edge portion of the positive electrode sheet 202 and the edge portion of the negative electrode sheet 206 are offset in the direction in which the cells are connected. Further, a second forming step (step S714 which is executed again after step S722) is also performed in the same way by the winding apparatus 400 to form another cell in which the edge portion of an electrode having a different polarity from the electrode of the cell formed in the first forming step overlaps with the edge portion of the electrode of the cell formed in the first forming step.

That is, after the winding of the sheets in the first forming step (step S714) is complete, the transfer apparatus holding the shaft 110 is moved (step S722) and the winding of sheets in the second forming step is performed (step S714). Alternatively, however, the second forming step may be performed without changing the position of the shaft 110. In this case, the second forming step (step S714 after step S722 is performed) can be performed by providing another winding apparatus having the same function as the winding apparatus 400 next to the location where the sheets are wound by the winding apparatus 400. This eliminates the time it takes to move the shaft 110, thereby improving efficiency in the winding process.

### [Second Exemplary Embodiment]

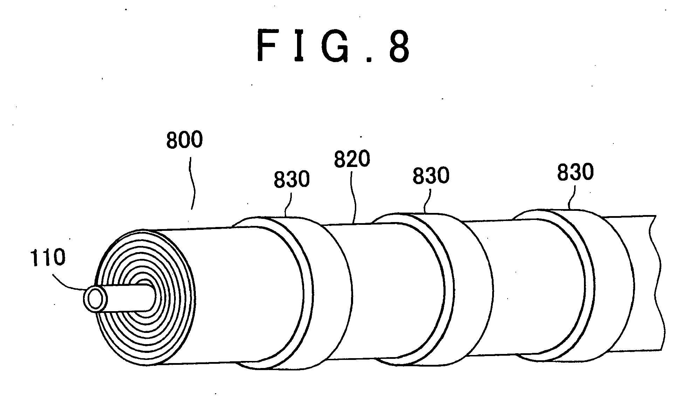

A second exemplary embodiment will hereinafter be described with reference to FIGS. 8 to 10B.

The construction of a secondary battery 800 according to the second exemplary embodiment will now be described referring to FIG 8. As shown in the drawing, the secondary battery 800 according to this modified example includes the shaft 110, positive and negative electrode sheets and separator sheets wound around the shaft 110, an insulation sheet (not shown), a battery case 820, rings 830 fit around the battery case 820 at predetermined intervals, and electrolytic solution (not shown) filled inside the battery case 820.

The positive and negative electrode sheets, separator sheets, and insulation sheet are wound around the shaft 110 in the same manner as in the secondary battery 100 according to the first exemplary embodiment so descriptions thereof will not be repeated.

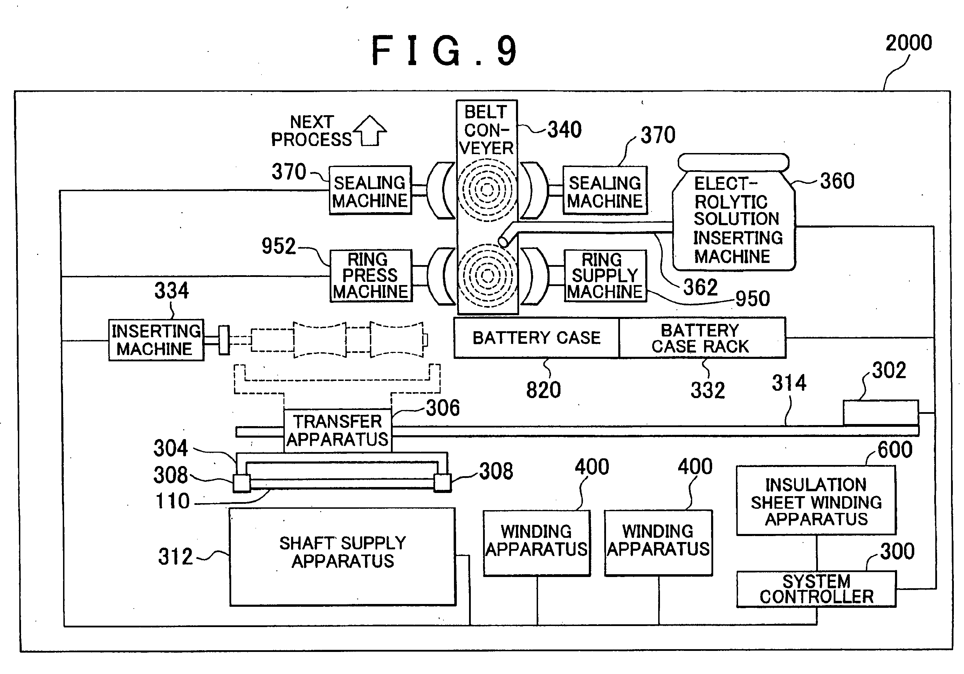

A manufacturing system 2000 for manufacturing the secondary battery 800 according to the second exemplary embodiment will now be described with reference to FIG 9. This manufacturing system 2000 differs from the manufacturing system 1000 according to the first exemplary embodiment in that it includes a ring supplying machine 950 and a ring press machine 952 instead of the crimping machine 350 (FIG 3). The other manufacturing equipment is the same as that used in the manufacturing system 1000 so descriptions thereof will be omitted.

The ring supplying machine 950 supplies the rings 830 to predetermined locations on the secondary battery 800 (FIG. 8). The ring press machine 952 then presses the rings 830 from the outside toward the secondary battery 800 so as to join adjacent cells at the connecting portion.

Accordingly, by fitting the rings 830 at the joining portion of the cells, it is possible to reinforce the joined state of the connecting portion of the cells. Further, even in cases where joining by crimping (at the crimping portion 130 in FIG 1) is not possible, the pressed rings enable internal resistance to be reduced, thereby suppressing a reduction in output voltage.

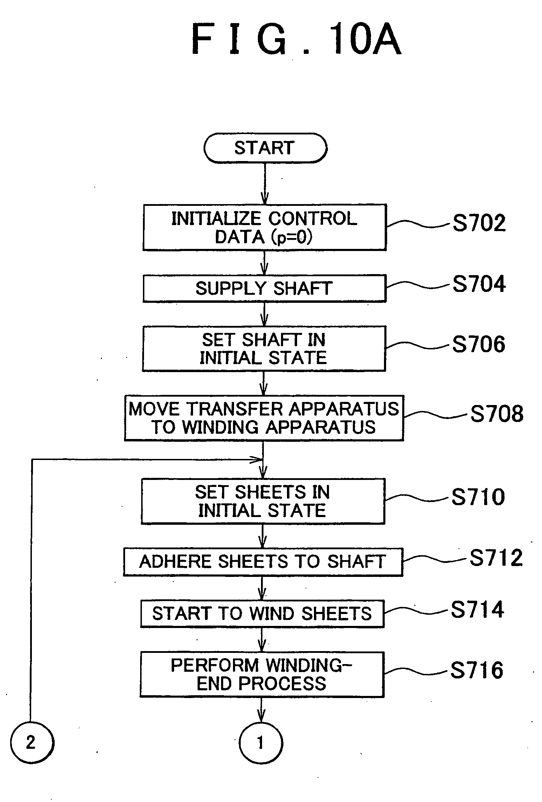

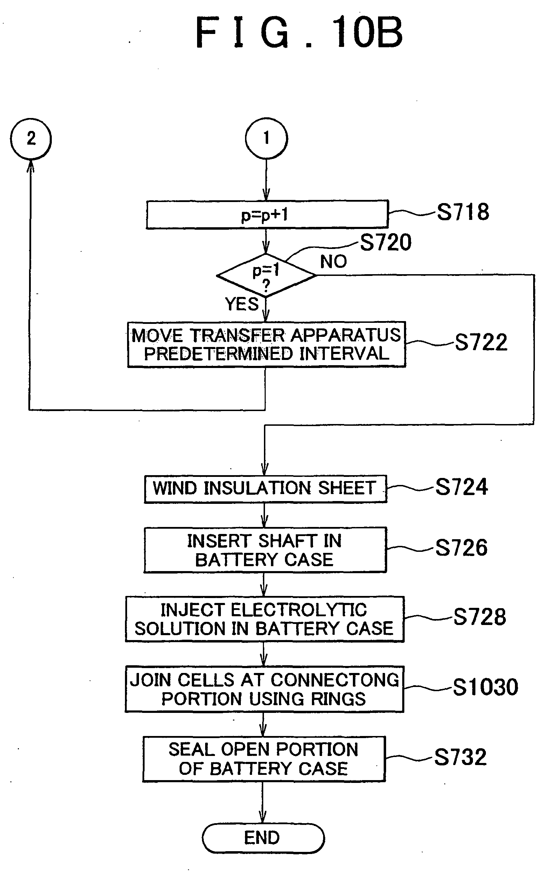

The manufacturing method of the secondary battery 800 according to this exemplary embodiment will now be described with reference to the flowchart of FIGS. 10A and 10B. This manufacturing method may be used with the manufacturing system 2000 shown in FIG 9, for example.

The method for manufacturing the secondary battery according to this exemplary embodiment differs from the method for manufacturing the secondary battery according to the first exemplary embodiment (FIGS. 7A and 7B) in that after injection of electrolytic solution (step S728), a process is performed to join adjacent cells at the connecting portion using rings (step S1030). The other processes are the same as the those in the manufacturing method according to the first exemplary embodiment so descriptions thereof will be omitted.

In step S1030, the ring press machine 952 presses the rings 830 supplied to a predetermined location by the ring supply machine 950. This predetermined location is the connecting portion between adjacent cells in the secondary battery 800. The rings 830 are then pressed, for example, in a direction from a closed portion (not shown) of the secondary battery 800 toward an open portion (also not shown) of the secondary battery 800 at each connecting portion so as to release the stress in a secondary battery case 820 from the open portion.

The operation of the manufacturing system 2000 according to the exemplary embodiment will now be described based on the construction and flowchart described above. Descriptions of the operations that are the same as those of the manufacturing system 1000 according to the first exemplary embodiment will be omitted.

After the electrolytic solution injecting machine 360 injects the electrolytic solution into the open portion of the secondary battery 800 (step S728), the belt conveyer 340 transfers the secondary battery 800 with the injected electrolytic solution to the ring press machine 952. One of the rings 830 is then supplied to the secondary battery 800 by the ring supply machine 950, and the ring press machine 952 presses the ring 830 onto the secondary battery 800 at a predetermined location so as to join the cells at the connecting portion (step S1030). The open portion of the battery case 820 is then sealed and the secondary battery 800 is transferred to the next process.

According to the secondary battery 800, the manufacturing system 2000, and the manufacturing method according to the second exemplary embodiment, a plurality of cells in the secondary battery 800 are joined at connecting portions by pressing the rings 830 provided around the outside of the cells. In this case, the rings 830 deform from the pressure so even after the pressure is released from the rings 830, adjacent cells are maintained in a joined state at the connecting portions. Accordingly, even in a case where the material of the battery case 120 is not suitable for plastic deformation (such as a resin film), adjacent cells can be reliably connected so internal resistance in the secondary battery 800 can be reduced.

### [Third Exemplary Embodiment]

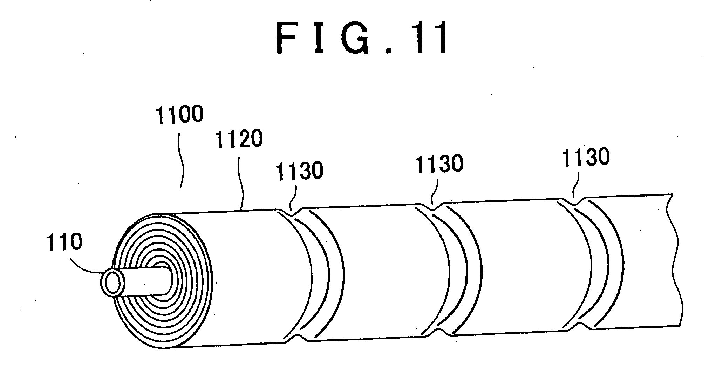

A third exemplary embodiment will hereinafter be described with reference to FIGS. 11 to 13B.

The construction of a secondary battery 1100 according to this exemplary embodiment will now be described referring to FIG. 11. As shown in the drawing, the secondary battery 1100 according to this exemplary embodiment includes the shaft 110, positive and negative electrode sheets and separator sheets, and an insulation sheet (not shown), all of which are wound around the shaft 110, a battery case 1120, and electrolytic solution (not shown) filled inside the battery case 1120. The secondary battery 1100 is welded at weld zones 1130 spaced at predetermined intervals.

The positive and negative electrode sheets, separator sheets, and insulation sheet are wound around the shaft 110 in the same manner as with the secondary battery 100 according to the first exemplary embodiment so descriptions thereof will not be repeated.

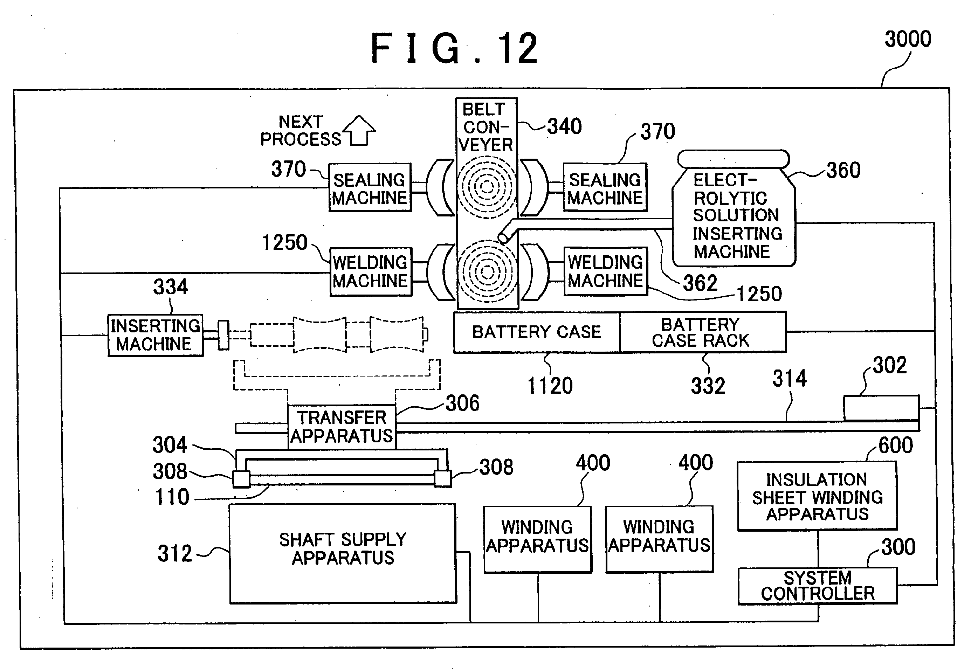

A manufacturing system 3000 for manufacturing the secondary battery 1100 according to the third exemplary embodiment will now be described with reference to FIG 12. This manufacturing system 3000 differs from the manufacturing system 1000 according to the first exemplary embodiment in that it includes two welding machines 1250 instead of the crimping machine 350 (FIG 3). The other manufacturing equipment is the same as that used in the manufacturing system 1000 so descriptions thereof will be omitted.

The welding machine 1250 welds the secondary battery 1100 in predetermined locations. Any of various welding methods may be used, including, but not limited to, ultrasonic welding and laser welding.

Accordingly, by welding the connecting portion of the cells, it is possible to reinforce the joined state of the electrodes at the connecting portion. Further, even in cases where joining by crimping (at the crimping portion 130 in FIG 1) is not possible, welding enables internal resistance to be reduced, thereby suppressing a reduction in output voltage.

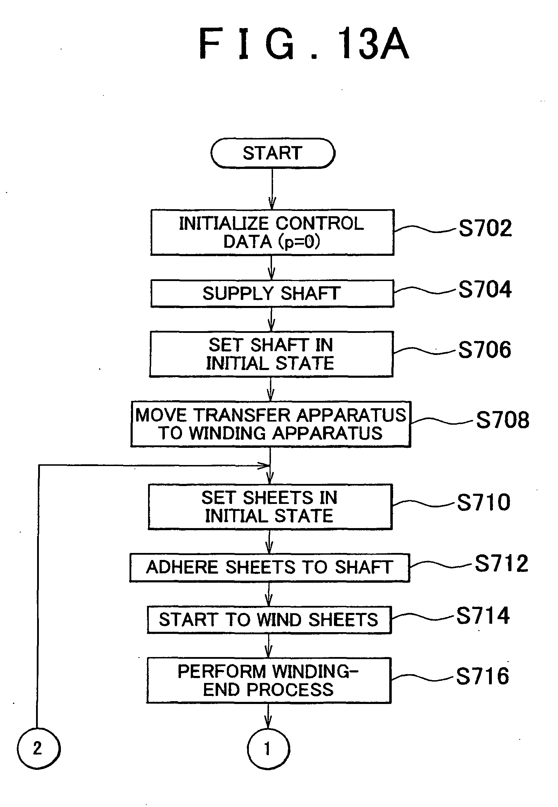

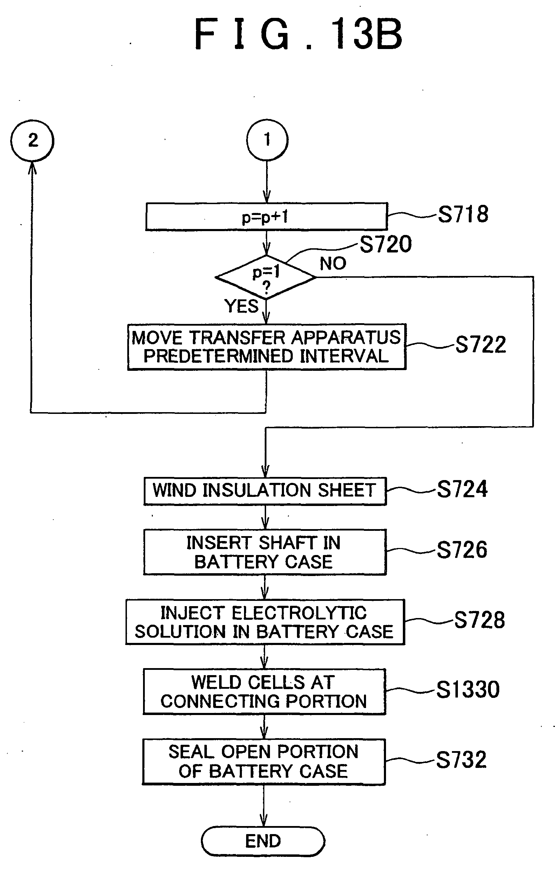

The manufacturing method of the secondary battery 1100 according to this exemplary embodiment will now be described with reference to the flowchart of FIGS. 13A and 13B. This manufacturing method may be used with the manufacturing system 3000 shown in FIG. 12, for example.

The method for manufacturing the secondary battery according to this exemplary embodiment differs from the method for manufacturing the secondary battery according to the first exemplary embodiment (FIGS. 7A and 7B) in that after the injection of electrolytic solution (step S728), a process is performed to join adjacent cells at the connecting portion by welding (step S1330). The other processes are the same as the those in the manufacturing method according to the first exemplary embodiment so descriptions thereof will be omitted.

In step S1330, the welding machine 1250 welds the secondary battery 1100 in a predetermined location. This predetermined location is a portion where adjacent cells in the secondary battery 1100 are to be connected.

The operation of the manufacturing system 3000 according to the exemplary embodiment will now be described based on the construction and flowchart described above. Description of the operations that are the same as those of the manufacturing system 1000 according to the first exemplary embodiment will be omitted.

After the electrolytic solution injecting machine 360 injects the electrolytic solution into the open portion of the secondary battery 1100 (S728), the belt conveyer 340 transfers the secondary battery 1100 with the injected electrolytic solution to the welding machine 1250. The welding machine 1250 then welds the secondary battery 1100 at predetermined locations (step S1330), thus joining the cells at the connecting portions.

According to the secondary battery 1100, the manufacturing system 3000, and the manufacturing method according to the third exemplary embodiment, the portions where adjacent cells in the secondary battery 1100 are to be connected are joined by welding, thus enabling a reliable connection. Accordingly, internal resistance is reduced so output from the secondary battery 1100 can be improved. Also, because there is no need for a connecting member, the process of attaching such a connecting member is also unnecessary. As a result, it is possible to provide a secondary battery, a manufacturing system, and manufacturing method for that secondary battery which can improve output and reduce the number of parts and manufacturing processes.

In the illustrated embodiment, the controllers are implemented with general purpose processors. It will be appreciated by those skilled in the art that the controllers can be implemented using a single special purpose integrated circuit (e.g., ASIC) having a main or central processor section for overall, system-level control, and separate sections dedicated to performing various different specific computations, functions and other processes under control of the central processor section. The controllers can be a plurality of separate dedicated or programmable integrated or other electronic circuits or devices (e.g., hardwired electronic or logic circuits such as discrete element circuits, or programmable logic devices such as PLDs, PLAs, PALs or the like). The controllers can be suitably programmed for use with a general purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the procedures described herein can be used as the controllers. A distributed processing architecture can be used for maximum data/signal processing capability and speed.

While the invention has been described with reference to preferred embodiments thereof, it is to be understood that the invention is not limited to the preferred embodiments or constructions. To the contrary, the scope of the invention is defined by the appended claims.

## Claims

1. A secondary battery including a plurality of cells aligned in one direction, wherein each cell of the plurality of cells comprises a flat sheet-shaped first electrode of one polarity (202) and a flat sheet-shaped second electrode of another polarity (206) layered on top of one another with a separator (204, 208) disposed therebetween; and
a shaft-shaped member (110), around which the layered electrodes are wound, **characterized in that**:
an edge portion of the first electrode in a first cell of the plurality of cells is overlapped and joined with an edge portion of the second electrode in a second cell, which is adjacent to the first cell, of the plurality of cells, wherein
the layered electrodes are wound around the shaft-shaped member (110) such that the edge portion of the first electrode in the first cell of the plurality of cells is wound around the edge portion of the second electrode in the second cell, which is adjacent to the first cell, of the plurality of cells, and wherein
the polarity of the edge portion of the first electrode in the first cell is different from the polarity of the edge portion of the second electrode in the second cell, and the plurality of cells is aligned in an axial direction of the shaft-shaped member (110).

2. The secondary battery according to claim 1, wherein the surface of the shaft-shaped member (110) is insulated.

3. The secondary battery according to claim 1, wherein the shape of the first electrode (202) and the shape of the second electrode (206) are the same, and the first electrode (202) and the second electrode (206) are layered offset from one another in the one direction.

4. The secondary battery according to claim 1, wherein the shaft-shaped member (110) is hollow.

5. The secondary battery according to any one of claims 1 to 4, wherein the edge portion of the first electrode in the first cell and the edge portion of the second electrode in the second cell are joined by crimping.

6. The secondary battery according to any one of claims 1 to 4, wherein the secondary battery further comprises a ring member (830), and the edge portion of the first electrode in the first cell and the edge portion of the second electrode in the second cell are joined by pressure from the ring member (830).

7. The secondary battery according to any one of claims 1 to 4, wherein the edge portion of the first electrode in the first cell and the edge portion of the second electrode in the second cell are joined by welding.

8. The secondary battery according to any one of claims 1 to 4, wherein the secondary battery further comprises a case (120; 820; 1120) which encloses the plurality of cells, and the edge portion of the first electrode in the first cell and the edge portion of the second electrode in the second cell are joined by being pressed together by pressure applied to the case (120; 820; 1120) from the outside.

9. The secondary battery according to claim 1, wherein the plurality of cells includes first and second cells (A, B) aligned in an axial direction of the shaft-shaped member (110), each cell comprising:
a first generally cylindrical electrode formed by the flat sheet-shaped first electrode layer (202) wound around the shaft-shaped member (110) and having said first polarity; and
a second generally cylindrical electrode formed by the flat sheet-shaped second electrode layer (206) wound around the shaft-shaped member (110) and having said second polarity;
wherein the edge portion of the first generally cylindrical electrode of the first polarity in the first cell (A) extends from a first end of said first cell (A) and is curved in a first direction and the edge portion of the second generally cylindrical electrode of the second polarity in the second cell (B) extends from a second end of said second cell (B) adjacent to the first cell (A) and is curved in a second direction opposite said first direction such that the edge portions of the first and second generally cylindrical electrodes are overlapped and in electrical contact with each other.

10. The secondary battery according to claim 1, wherein the plurality of cells includes first and second cells (A, B) aligned in an axial direction of the shaft-shaped member (110), each cell comprising:
a first generally cylindrical electrode formed by the flat sheet-shaped first electrode layer (202) wound around the shaft-shaped member (110) and having said first polarity;
a second generally cylindrical electrode formed by the flat sheet-shaped first electrode layer (202) wound around the shaft-shaped member (110) and having said first polarity;
a third generally cylindrical electrode formed by the flat sheet-shaped second electrode layer (206) wound around the shaft-shaped member (110) and having said second polarity; and
a fourth generally cylindrical electrode formed by the flat sheet-shaped second electrode layer (206) wound around the shaft-shaped member (110) and having said second polarity;
wherein a plurality of separators (204, 208) are disposed between said generally cylindrical electrodes for separating said first, second, third and fourth generally cylindrical electrodes, respectively, from one another; and
wherein the edge portion of at least one generally cylindrical electrode of the first polarity in the first cell (A) extends from an end of said first cell (A) and is curved in a first direction and the edge portion of at least one generally cylindrical electrode of the second polarity in the second cell (B) extends from an adjoining end of said second cell (B) and is curved in a second direction opposite said first direction such that the edge portions of the first and second generally cylindrical electrodes are overlapped and in electrical contact with each other.

## Patentansprüche

1. Sekundärbatterie mit einer Mehrzahl an Zellen, die in einer Richtung ausgerichtet sind, wobei jede Zelle aus der Mehrzahl an Zellen eine flache tafelförmige erste Elektrode mit einer Polarität (202) und eine flache tafelförmige zweite Elektrode mit einer anderen Polarität (206) aufweist, die aufeinander geschichtet sind und wobei sich ein Separator (204, 208) dazwischen befindet; und
einem wellenförmigen Element (110), um das die geschichteten Elektroden gewickelt sind, **dadurch gekennzeichnet, dass**:
sich ein Randabschnitt der ersten Elektrode in einer ersten Zelle aus der Mehrzahl an Zellen mit einem Randabschnitt der zweiten Elektrode in einer zweiten Zelle aus der Mehrzahl an Zellen, die sich neben der ersten Zelle befindet, überlappt und verbindet, wobei
die geschichteten Elektroden so um das wellenförmige Element (110) gewickelt sind, dass der Randabschnitt der ersten Elektrode in der ersten Zelle aus der Mehrzahl an Zellen um den Randabschnitt der zweiten Elektrode in der zweiten Zelle aus der Mehrzahl an Zellen, die sich neben der ersten Zelle befindet, gewickelt ist, und wobei
sich die Polarität des Randabschnitts der ersten Elektrode in der ersten Zelle von der Polarität des Randabschnitts der zweiten Elektrode in der zweiten Zelle unterscheidet, und die Mehrzahl an Zellen in einer axialen Richtung des wellenförmigen Elements (110) ausgerichtet ist.

2. Sekundärbatterie nach Anspruch 1, wobei die Oberfläche des wellenförmigen Elements (110) isoliert ist.

3. Sekundärbatterie nach Anspruch 1, wobei die Form der ersten Elektrode (202) und die Form der zweiten Elektrode (206) gleich sind, und die erste Elektrode (202) und die zweite Elektrode (206) in der einen Richtung versetzt zueinander angeordnet sind.

4. Sekundärbatterie nach Anspruch 1, wobei das wellenförmige Element (110) hohl ist.

5. Sekundärbatterie nach einem der Ansprüche 1 bis 4, wobei der Randabschnitt der ersten Elektrode in der ersten Zelle und der Randabschnitt der zweiten Elektrode in der zweiten Zelle durch Einfalzen verbunden werden.

6. Sekundärbatterie nach einem der Ansprüche 1 bis 4, wobei die Sekundärbatterie ferner ein Ringelement (830) aufweist und der Randabschnitt der ersten Elektrode in der ersten Zelle und der Randabschnitt der zweiten Elektrode in der zweiten Zelle durch Druck des Ringelements (830) verbunden werden.

7. Sekundärbatterie nach einem der Ansprüche 1 bis 4, wobei der Randabschnitt der ersten Elektrode in der ersten Zelle und der Randabschnitt der zweiten Elektrode in der zweiten Zelle durch Schweißen verbunden werden.

8. Sekundärbatterie nach einem der Ansprüche 1 bis 4, wobei die Sekundärbatterie ferner ein Gehäuse (120; 820; 1120) aufweist, das die Mehrzahl an Zellen umschließt, und der Randabschnitt der ersten Elektrode in der ersten Zelle und der Randabschnitt der zweiten Elektrode in der zweiten Zelle verbunden werden, indem sie durch Druck zusammengedrückt werden, der von außen auf das Gehäuse (120; 820; 1120) ausgeübt wird.

9. Sekundärbatterie nach Anspruch 1, wobei die Mehrzahl an Zellen erste und zweite Zellen (A, B) beinhaltet, die in einer axialen Richtung des wellenförmigen Elements (110) ausgerichtet sind, wobei jede Zelle aufweist:
eine erste im Wesentlichen zylindrische Elektrode, die durch die flache tafelförmige erste Elektrodenschicht (202), die um das wellenförmige Element (110) gewickelt ist, ausgebildet wird, und die die erste Polarität aufweist; und eine zweite im Wesentlichen zylindrische Elektrode, die durch die flache tafelförmige zweite Elektrodenschicht (206), die um das wellenförmige Element (110) gewickelt ist, ausgebildet wird, und die die zweite Polarität aufweist;
wobei der Randabschnitt der ersten im Wesentlichen zylindrischen Elektrode der ersten Polarität in der ersten Zelle (A) von einem ersten Ende der ersten Zelle (A) aus verläuft und in einer ersten Richtung gebogen ist, und der Randabschnitt der zweiten im Wesentlichen zylindrischen Elektrode der zweiten Polarität in der zweiten Zelle (B) von einem zweiten Ende der zweiten Zelle (B) neben der ersten Zelle (A) aus verläuft und in einer zweiten Richtung entgegengesetzt zu der ersten Richtung gebogen ist, so dass sich die Randabschnitte der ersten und zweiten im Wesentlichen zylindrischen Elektroden überlappen und miteinander elektrisch verbunden sind.

10. Sekundärbatterie nach Anspruch 1, wobei die Mehrzahl an Zellen erste und zweite Zellen (A, B) beinhaltet, die in einer axialen Richtung des wellenförmigen Elements (110) ausgerichtet sind, wobei jede Zelle aufweist:
eine erste im Wesentlichen zylindrische Elektrode, die durch die flache tafelförmige erste Elektrodenschicht (202), die um das wellenförmige Element (110) gewickelt ist, ausgebildet wird, und die die erste Polarität aufweist;
eine zweite im Wesentlichen zylindrische Elektrode, die durch die flache tafelförmige erste Elektrodenschicht (202), die um das wellenförmige Element (110) gewickelt ist, ausgebildet wird, und die die erste Polarität aufweist;
eine dritte im Wesentlichen zylindrische Elektrode, die durch die flache tafelförmige zweite Elektrodenschicht (206), die um das wellenförmige Element (110) gewickelt ist, ausgebildet wird, und die die zweite Polarität aufweist;
eine vierte im Wesentlichen zylindrische Elektrode, die durch die flache tafelförmige zweite Elektrodenschicht (206), die um das wellenförmige Element (110) gewickelt ist, ausgebildet wird, und die die zweite Polarität aufweist;
wobei sich eine Mehrzahl an Separatoren (204, 208) zwischen den im Wesentlichen zylindrischen Elektroden befindet, um die erste, zweite, dritte und vierte im Wesentlichen zylindrische Elektrode jeweils voneinander zu trennen; und
wobei der Randabschnitt zumindest einer im Wesentlichen zylindrischen Elektrode der ersten Polarität in der ersten Zelle (A) von einem Ende der ersten Zelle (A) aus verläuft und in einer ersten Richtung gebogen ist und der Randabschnitt zumindest einer im Wesentlichen zylindrischen Elektrode der zweiten Polarität in der zweiten Zelle (B) von einem angrenzenden Ende der zweiten Zelle (B) aus verläuft und in einer zweiten Richtung entgegengesetzt zu der ersten Richtung gebogen ist, so dass sich die Randabschnitte der ersten und zweiten im Wesentlichen zylindrischen Elektroden überlappen und miteinander elektrisch verbunden sind.

## Revendications

1. Batterie secondaire qui comprend une pluralité de cellules alignées dans une direction, dans laquelle chaque cellule de ladite pluralité de cellules comprend une première électrode plate d'une polarité (202) et une seconde électrode plate d'une autre polarité (206) disposées l'une sur l'autre avec un séparateur (204, 208) placé entre elles ; et
Un élément en forme d'axe (110), autour duquel sont enroulées lesdites électrodes empilées, **caractérisée en ce que** :
une partie de bord de ladite première électrode d'une première cellule de ladite pluralité de cellules est chevauchée et jointe à une partie de bord de ladite seconde électrode d'une seconde cellule, qui est adjacente à ladite première cellule de ladite pluralité de cellules,
lesdites électrodes empilées sont enroulées autour dudit élément en forme d'axe (110) de sorte que la partie de bord de ladite première électrode de ladite première cellule de ladite pluralité de cellules soit enroulée autour de la partie de bord de ladite seconde électrode de ladite seconde cellule, qui est adjacente à ladite première cellule de ladite pluralité de cellules, et
la polarité de la partie de bord de ladite première électrode de ladite première cellule est différente de celle de la partie de bord de ladite seconde électrode de ladite seconde cellule, et ladite pluralité de cellule est alignée dans une direction axiale dudit élément en forme d'axe (110).

2. Batterie secondaire selon la revendication 1, dans laquelle la surface dudit élément en forme d'axe (110) est isolée.

3. Batterie secondaire selon la revendication 1, dans laquelle la forme de ladite première électrode (202) et la forme de ladite seconde électrode (206) sont identiques, et ladite première électrode (202) et ladite seconde électrode (206) sont disposées en étant décalées l'une par rapport à l'autre dans ladite direction.

4. Batterie secondaire selon la revendication 1, dans laquelle ledit élément en forme d'axe (110) est creux.

5. Batterie secondaire selon l'une quelconque des revendications 1 à 4, dans laquelle la partie de bord de ladite première électrode de ladite première cellule et la partie de bord de ladite seconde électrode de ladite seconde cellule sont jointes par sertissage.

6. Batterie secondaire selon l'une quelconque des revendications 1 à 4, qui comprend en outre une bague (830), et dans laquelle la partie de bord de ladite première électrode de ladite première cellule et la partie de bord de ladite seconde électrode de ladite seconde cellule sont jointes par la pression de ladite bague (830).

7. Batterie secondaire selon l'une quelconque des revendications 1 à 4, dans laquelle la partie de bord de ladite première électrode de ladite première cellule et la partie de bord de ladite seconde électrode de ladite seconde cellule sont jointes par soudage.

8. Batterie secondaire selon l'une quelconque des revendications 1 à 4, qui comprend en outre une enceinte (120 ; 820 ; 1120) qui contient ladite pluralité de cellules, et dans laquelle la partie de bord de ladite première électrode de ladite première cellule et la partie de bord de ladite seconde électrode de ladite seconde cellule sont jointes sous la pression exercée sur ladite enceinte (120 ; 820 ; 1120) par l'extérieur.

9. Batterie secondaire selon la revendication 1, dans laquelle ladite pluralité de cellules comprend une première et une seconde cellules (A, B) alignées dans une direction axiale dudit élément en forme d'axe (110), chaque cellule comprenant :
une première électrode généralement cylindrique formée par la première couche d'électrode plate (202) enroulée autour dudit élément en forme d'axe (110) et ayant ladite première polarité ; et
une seconde électrode généralement cylindrique formée par ladite seconde couche d'électrode plate (206) enroulée autour dudit élément en forme d'axe (110) et ayant ladite seconde polarité ;
dans laquelle la partie de bord de ladite première électrode généralement cylindrique de la première polarité de ladite première cellule (A) s'étend depuis une première extrémité de ladite première cellule (A) et est incurvée dans une première direction, et la partie de bord de ladite seconde électrode généralement cylindrique de la seconde polarité de ladite seconde cellule (B) s'étend depuis une seconde extrémité de ladite seconde cellule (B) adjacente à ladite première cellule (A) et est incurvée dans une seconde direction opposée à ladite première direction de sorte que les parties de bord desdites première et seconde électrodes généralement cylindriques soient chevauchées et en contact électrique l'une avec l'autre.

10. Batterie secondaire selon la revendication 1, dans laquelle ladite pluralité de cellules comprend une première et une seconde cellules (A, B) alignées dans une direction axiale dudit élément en forme d'axe (110), chaque cellule comprenant :
une première électrode généralement cylindrique formée par ladite première couche d'électrode plate (202) enroulée autour dudit élément en forme d'axe (110) et ayant ladite première polarité ;
une seconde électrode généralement cylindrique formée par ladite première couche d'électrode plate (202) enroulée autour dudit élément en forme d'axe (110) et ayant ladite première polarité ;
une troisième électrode généralement cylindrique formée par ladite seconde couche d'électrode plate (206) enroulée autour dudit élément en forme d'axe (110) et ayant ladite seconde polarité ; et
une quatrième électrode généralement cylindrique formée par ladite seconde couche d'électrode plate (206) enroulée autour dudit élément en forme d'axe (110) et ayant ladite seconde polarité ;
dans laquelle une pluralité de séparateurs (204, 208) est disposée entre lesdites électrodes généralement cylindriques afin de séparer lesdites première, seconde, troisième et quatrième électrodes généralement cylindriques, respectivement, les unes des autres ; et
dans laquelle la partie de bord d'au moins une électrode généralement cylindrique de ladite première polarité de ladite première cellule (A) s'étend depuis une extrémité de ladite première cellule (A) et est incurvée dans une première direction, et la partie de bord d'au moins une électrode généralement cylindrique de ladite seconde polarité de ladite seconde cellule (B) s'étend depuis une extrémité adjacente de ladite seconde cellule (B) et est incurvée dans une seconde direction opposée à ladite première direction de sorte que les parties de bord desdites première et seconde électrodes généralement cylindriques soient chevauchées et en contact électrique l'une avec l'autre.
